# EUROPEAN PATENT SPECIFICATION

(11) **EP 3 142 904 B1**
(45) Date of publication and mention of the grant of the patent: **04.04.2018**
(21) Application number: 15724901.2
(22) Date of filing: 13.05.2015
(51) Int. Cl.: B60S 1/40

(54) **WINDSCREEN WIPER DEVICE**
SCHEIBENWISCHERVORRICHTUNG
DISPOSITIF ESSUIE-GLACE

(30) Priority: 13.05.2014 US 201461992621 P
(43) Date of publication of application: 22.03.2017
(73) Proprietor: Federal-Mogul Motorparts Corporation, Southfield, MI 48034 (US)
(72) Inventor: YOUNG, William, D, Waterford, MI 48329 (US); COX, Dennis, E., Belleville, MI 48111 (US)
(74) Representative: Hooiveld, Arjen Jan Winfried
(86) International application number: PCT/US2015/030482
(87) International publication number: WO 2015/175604

(56) References cited:
- DE-U1-202012 102 614
- US-A1- 2010 000 041
- US-A1- 2011 247 166

## Description

### CROSS-REFERENCE TO RELATED APPLICATION

This application claims the benefit of U.S. Provisional Patent Application Serial No. 61/992,621, filed May 13, 2014, and U.S. Utility Patent Application Serial No. 14/710,745, filed May 13, 2015.

### BACKGROUND OF THE INVENTION

### 1. Field of the Invention

The present invention is related to windscreen wiper devices, or wiper blade assemblies, and more precisely, to connector assemblies for connecting wiper blade assemblies to different types of wiper arms.

### 2. Related Art

Passenger vehicles may have any one of a range of different styles of oscillating wiper arms including, for example, various sizes of hook-style wiper arms, pin-style wiper arms, bayonet-style wiper arms and rock lock-style wiper arms. Some of the most common styles of wiper arms are 9X3, 9X4X23, 9X4X28 and 9X4X33 sized hook-style wiper arms; 19 and 22 mm sized bayonet-style wiper arms; 19 mm, 22 mm, 4.74 mm and 6.35 mm (3/16" and 1/4") sized cylindrical pin-style wiper arms; and two different sizes of rock lock-style wiper arms.

For both original equipment and after market applications, wiper blade manufacturers typically manufacture wiper devices with connector assemblies which are either adapted only for attachment to one style of wiper arm or which include many pieces that must be in order to connect with more than one style of wiper arm. For example, some after market wiper blade assemblies are sold as expendable articles with a connector assembly with interchangeable parts to allow the wiper blade assembly to be operably attached with two or more of the above-referenced types of wiper arms commonly found on vehicles.

### SUMMARY OF THE INVENTION AND ADVANTAGES

One aspect of the present invention provides for a windscreen wiper device. The windscreen wiper device includes a longitudinally extending wiper blade of an elastic material for sealing against a windscreen. A carrier element operatively supports and biases the wiper blade into a pre-curved configuration. A connecting assembly is further provided and includes a base which is engaged with at least one of the wiper blade and the carrier element. The connecting assembly additionally includes and a joint part which is pivotally connected with the base and is adapted to directly secure with a range of different styles of oscillating wiper arms. The joint part is made as one integral piece and includes a main body portion and a nose portion. The main body portion is generally U-shaped in cross-section and extends longitudinally from a front end to a back end and has a top and a pair of sides. A resilient tongue is formed into the top and has a button which protrudes upwardly therefrom for engaging within an opening of a bayonet-style wiper arm. The nose portion is hingedly connected with the front end of the main body portion at a resilient hinge and includes a pair of locking tangs that are spaced vertically from the resilient hinge for lockingly engaging a front edge of at least one style of a top lock-style wiper arm. A pair of locking lugs extend from the back end of the main body portion opposite of the nose portion for receiving legs of the top lock-style wiper arm. The sides of the main body portion present a pair of ledges which are spaced vertically from one another to present a groove between said ledges.

The windscreen wiper device is advantageous because the two-piece connecting assembly is able to lockingly and detachingly engage with a wide range of different styles of wiper arms without any interchangeable parts. This leads to cost savings through economies of scale since the same pieces can be employed for use with a more diverse range of wiper arms.
US patent publication no. 2011/247166 discloses a windscreen wiper device in according to the preamble of claims 1 and 11.

### BRIEF DESCRIPTION OF THE DRAWINGS

These and other features and advantages of the present invention will be readily appreciated, as the same becomes better understood by reference to the following detailed description when considered in connection with the accompanying drawings wherein:
Figure 1 is an isometric view of an exemplary embodiment of a windscreen wiper device;
Figure 2 is a cross-sectional view of the windscreen wiper device taken along line 2-2 of Figure 1;
Figure 3 is an exploded view of a connecting assembly of the windscreen wiper device of Figure 1;
Figure 4 is a perspective view of the connecting assembly engaged with a 19 mm bayonet-style wiper arm;
Figure 5 is a perspective view of the connecting assembly of Figure 3 engaged with a 22 mm bayonet-style wiper arm;
Figure 6 is a perspective view of a side pin-style wiper arm;
Figure 7 is a perspective view of the connecting assembly of Figure 3 engaged with the side pin-style wiper arm of Figure 6;
Figure 8 is a perspective view of the connecting assembly of Figure 3 engaged with a top lock-style wiper arm; and
Figure 9 is a perspective view of the connecting assembly of Figure 3 engaged with a top lock with window-style wiper arm.

### DESCRIPTION OF THE ENABLING EMBODIMENT

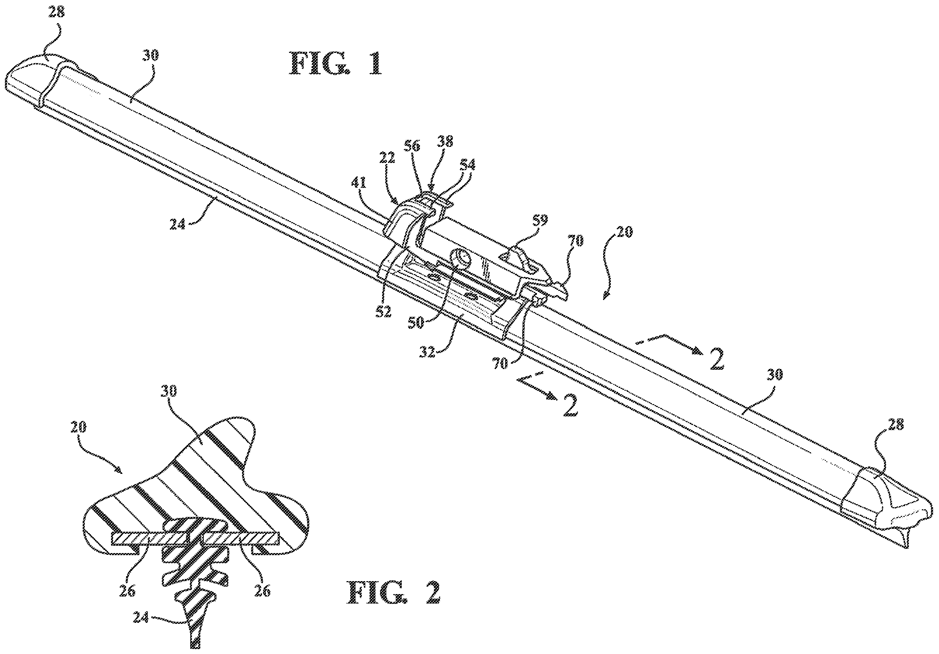

Referring to the Figures, wherein like numerals indicate corresponding parts throughout the several views, an exemplary embodiment of an improved windscreen wiper device **20** with a connecting assembly **22** that is configured for attachment to a range of different styles and sizes of oscillating wiper arms is generally shown in Figures 1 and 2. The windscreen wiper device **20** includes a longitudinally extending wiper blade **24** which is made of an elastic, flexible material for sealing against a windscreen (not shown) of a vehicle. The wiper blade **24** is operatively supported by a carrier element **26** which biases the wiper blade **24** into the pre-curved configuration shown in Figure 1 for sealing the length of the wiper blade **24** along a curved windshield. In the exemplary embodiment, the wiper blade **24** includes a pair of laterally facing grooves, and the carrier element **26** includes a pair of flexors **26** which are operably received in the grooves. Neighboring ends of the flexors **26** are interconnected with one another via end caps **28,** and a pair of sub-spoilers **30**, which are constructed as separate pieces from one another, extend longitudinally from the connecting assembly **22** to the end caps **28.**

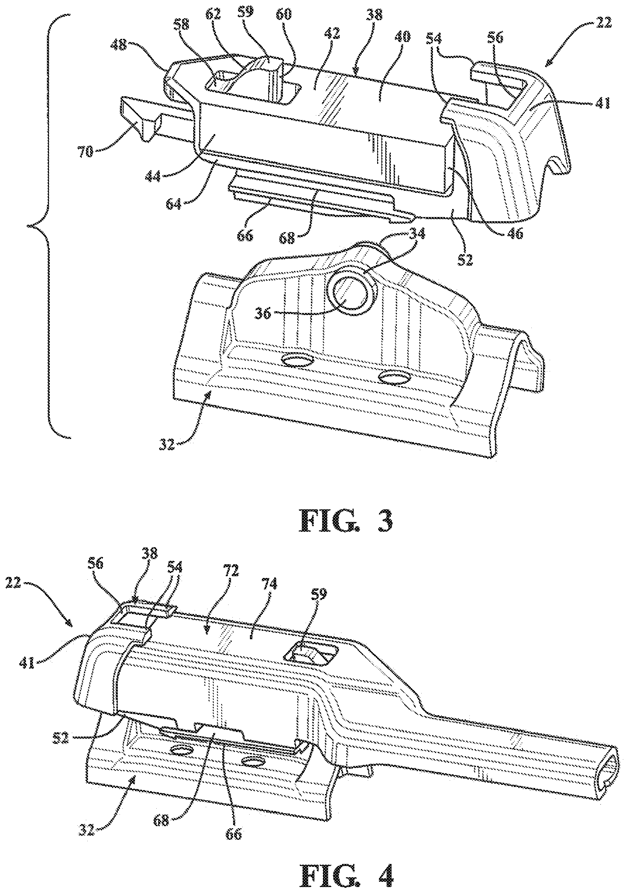

Referring now to Figure 3, the connecting assembly **22** includes a base **32** which is engaged with at least one of the wiper blade **24** and the carrier element **26.** The base **32** includes a pair of laterally extending projections **34** which are axially aligned with one another. Each projection **34** has a circular shape to present an outer bearing surface. At least one of the projections **34** also includes a through hole **36** to present an inner bearing surface. The base **32** is preferably made as one integral piece of a polymeric material which is shaped through an injection molding process. However, it should be appreciated that the base **32** could be made of any suitable material and through any suitable process.

The connecting assembly **22** also includes a joint part **38,** or an adapter, which is made as one integral piece of material and includes a main body portion **40** and a nose portion **41**. The main body portion **40** is generally U-shaped in cross-section with a top **42** and a pair of sides **44** and extends longitudinally from a front end **46** to a back end **48.** The sides **44** of the main body portion **40** extend vertically downwardly in spaced and parallel relationship with one another and transversely to the top **42.** The sides **44** have axially aligned openings which are circular in shape and which receive the circular projections **34** of the base **32** to allow the joint part **38** to freely pivot relative to the base **32** about a pivot axis. On one of the sides **44** (shown in Figure 1), the opening **50** extends completely through the main body portion **40**, whereas the opening on the side **44** shown in Figure 3 does not extend completely through the main body portion **40**.

The nose portion **41** of the joint part **38** is integrally connected with the main body portion **40** at a resilient hinge **52.** The resilient hinge **52** allows the nose portion **41** to be pivoted forwardly away from the main body portion **40.** The nose portion **41** also includes a pair of upper locking tangs **54** which are spaced vertically from the resilient hinge **52** and are elevated relative to the top **42** of the main body portion **40** and extend rearwardly towards the main body portion **40.** The upper locking tangs **54** are spaced laterally from one another on opposite sides of a U-shaped slot **56.**

The top **42** of the main body portion **40** includes a resilient tongue **58** with a button **59** that protrudes upwardly therefrom. Specifically, the button **59** projects upwardly above the top **42** of the main body portion **40.** The resilient tongue **58** is interconnected with the remainder of the top **42** adjacent the back end **48** and extends longitudinally towards the front end **46** of the main body portion **40.** The button **59** on the resilient tongue **58** includes a vertical surface **60** which faces longitudinally towards the front end **46** of the main body portion **40** and a ramped surface **62** which faces longitudinally towards the back end **48.** The combination of the vertical and ramped surfaces **60, 62** provides the button **59** with a shark fin-like shape.

Each of the sides **44** of the joint part **38** also includes two vertically spaced and longitudinally extending ledges **64, 66** and presents a groove **68** between the ledges **64, 66.** Specifically, each side **44** includes an upper ledge **64** and a lower ledge **66,** and each of the ledges **64, 66** has an upper surface and a lower surface.

The joint part **38** further includes a pair of locking lugs **70,** or retention tabs, which extend laterally outwardly. In the exemplary embodiment, the locking lugs **70** are interconnected with the back end **48** of the main body portion **40** via a pair of longitudinally extending legs. Each locking lug **70** has a forwardly facing surface which slants upwardly and forwardly from a lower-most edge. The longitudinally extending legs are generally rigid.

The single piece joint part **38** is configured for attachment with a range of different styles and sizes of oscillating wiper arms. Referring now to Figure 4, the joint part **38** is shown in locking engagement with a 19 mm sized bayonet-style wiper arm **72.** The 19 mm bayonet-style wiper arm **74** is engaged with the joint part **38** by aligning a pair of opposing and laterally inwardly extending legs on the wiper arm **72** with the groove **68** (shown in Figure 3) between the ledges **64**, **66** of the joint part **38** and sliding the joint part **38** rearwardly. The ramped surface **62** (shown in Figure 3) of the button **59** causes the button **59** to automatically pivot downwardly when contacted by a front edge of the wiper arm **72.** The button **59** then snaps upwardly into a hole on a top wall **74** of the wiper arm **72,** to lockingly engage the joint part **38** with the wiper arm **72.** As shown, when engaged with the 19 mm bayonet-style wiper arm **72,** a top surface of the button **59** is generally flush with the top wall **74** of the wiper arm **72.** The joint part **38** may be detached from the 19 mm bayonet-style wiper arm **72** by simply pressing the button **59** downwardly through the hole in the top wall **74** of the wiper arm **72** and sliding the joint part **38** forwardly and away from the wiper arm **72.**

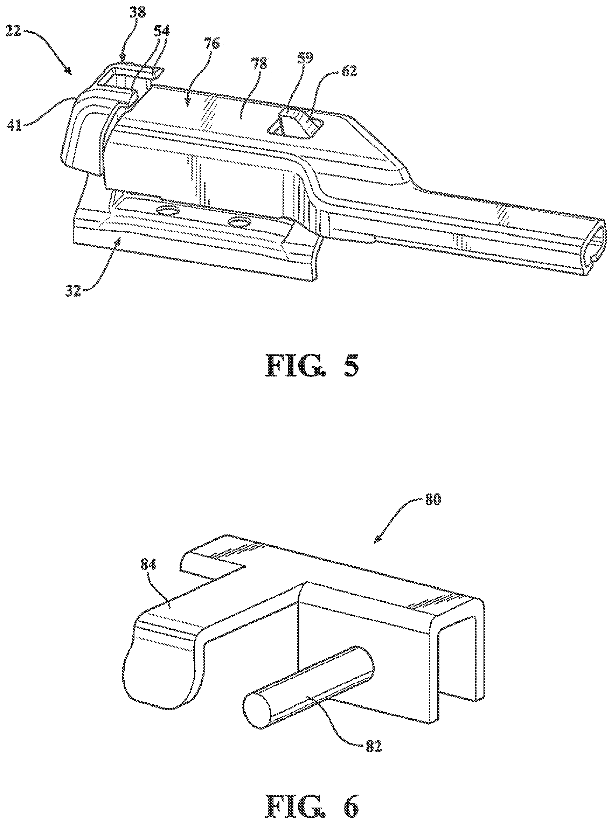

Referring now to Figure 5, the joint part **38** is shown in locking engagement with a 22 mm bayonet-style wiper arm **76.** The 22 mm bayonet-style wiper arm **76** is engaged with the joint part **38** by aligning the inwardly extending legs of the wiper arm **76** with an underside of the lower ledge **66** (shown in Figure 3) such that the legs wrap around and engage with a lower surface of the lower ledge **66** and urging the joint part **38** rearwardly. Similar to the 19 mm sized wiper arm, the ramped surface **62** (shown in Figure 3) of the button **59** automatically pivots downwardly when contacted by a front edge of the wiper arm **76** and then snaps upwardly into a hole in a top wall **78** of the wiper arm **76.** Unlike the 19 mm sized wiper arm, when engaged with the 22 mm sized bayonet-style wiper arm **76,** the button **59** projects above the top wall **78** of the wiper arm **76.** The joint part **38** may be detached from the 22 mm bayonet-style wiper arm **76** by simply pressing the button **59** downwardly through the hole in the top wall **78** of the wiper arm **76** and sliding the joint part **38** forwardly and away from the wiper arm **76.**

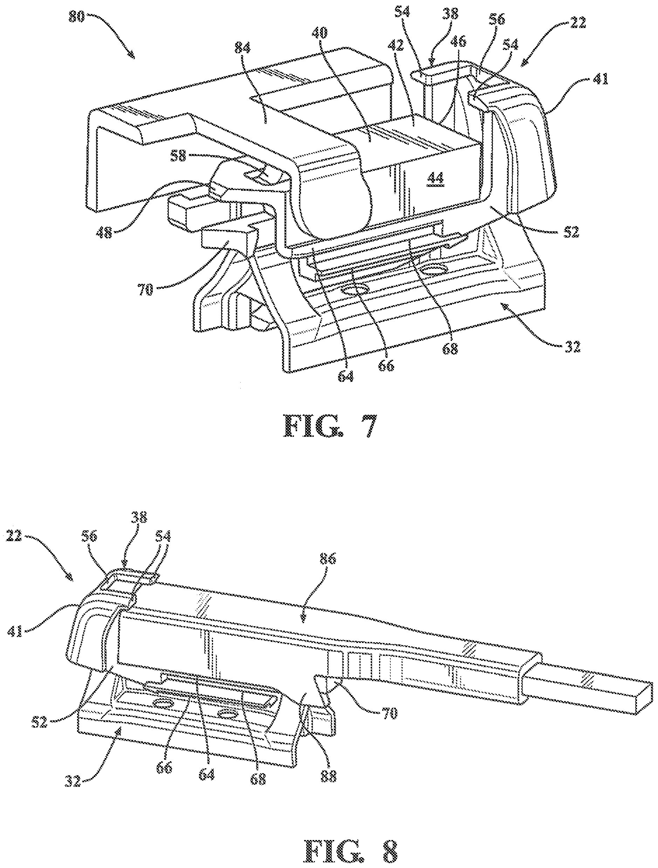

Referring now to Figures 6 and 7, the joint part **38** is also configured for engagement with a side pin-style wiper arm **80.** The side pin-style wiper arm **80** is engaged with the joint part **38** by inserting a pin **82** on the wiper arm **80** into the through hole **36** (shown in Figure 3) on the projection **34** (also shown in Figure 3) of the base **32** and pivoting the joint part **38** relative to the wiper arm **80** until an extension **84** on the wiper arm **80** contacts the top **42** of the main body portion **40**. The joint part **38** may be detached from the side pin-style wiper arm **80** by reversing this process. The size of the side pin-style wiper arm **80** may either be 19 mm or 22 mm.

Referring now to Figure 8, the joint part **38** is shown in locking engagement with a top lock-style wiper arm **86.** During the attachment process, locking lugs **70** are received within a pair of legs **88** on the side walls of the wiper arm **86,** and the joint part **38** is pivoted upwardly relative to the wiper arm **86.** A tongue (not shown) on a front edge of the wiper arm **86** automatically urges the nose portion **41** of the joint part **38** forwardly to pivot the nose portion **41** about the resilient hinge **52** until the tongue passes through the U-shaped slot **56,** thereby allowing the locking tangs **54** on the nose portion **41** to snappingly lock into engagement with the front edge of the wiper arm **86.** When properly engaged with the top lock-style wiper arm **86,** upper surface of the upper ledges **64** contact and support bottom edges of the wiper arm **86.** The joint part **38** may be detached from the top lock-style wiper arm **86** by urging the nose portion **41** forwardly to disengage the locking tangs **54** from the front edge of the wiper arm **86,** pivoting the joint part **38** away from the wiper arm **86** and disengaging the locking lugs **70** of the joint part **38** from the legs **88** of the wiper arm **86**.

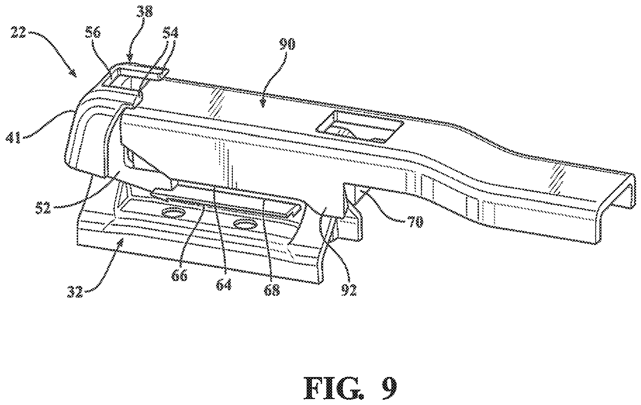

Referring now to Figure 9, the joint part **38** is shown in locking engagement with a top lock with window-style wiper arm **90.** Similar to the top lock-style wiper arm, the attachment process involves receiving the locking lugs **70** within a pair of legs **92** on the side walls of the wiper arm **90** and pivoting the joint part **38** upwardly relative to the wiper arm **90.** A tongue (not shown) on a front edge of the wiper arm **90** automatically urges the nose portion **41** of the joint part **38** forwardly to pivot the nose portion **41** about the resilient hinge **52** until the tongue passes through the U-shaped slot **56,** thereby allowing the locking tangs **54** to snappingly lock into engagement with the front edge of the wiper arm **90.** The joint part **38** may be detached from the top lock with window-style wiper arm **90** by urging the nose portion **41** forwardly to disengage the locking tangs **54** from the front edge of the wiper arm **90**, pivoting the joint part **38** away from the wiper arm **90** and disengaging the locking lugs **70** of the joint part **38** from the legs **92** of the wiper arm **90.**

Obviously, many modifications and variations of the present invention are possible in light of the above teachings and may be practiced otherwise than as specifically described while within the scope of the appended claims.

## Claims

1. A windscreen wiper device (20), comprising:
a longitudinally extending wiper blade (24) of an elastic material for sealing against a windscreen;
a carrier element (26) operatively supporting and biasing said wiper blade (24) into a pre-curved configuration;
a connecting assembly (22) including a base (32) which is engaged with at least one of said wiper blade (24) and said carrier element (26) and a joint part (38) which is pivotally connected with said base (32) and is adapted to directly secure with a range of different styles of oscillating wiper arms;
said joint part (38) being made as one integral piece and including a main body portion (40) and a nose portion (41);
said main body portion (40) being generally U-shaped in cross-section and extending longitudinally from a front end (46) to a back end (48) and having a top (42) and a pair of sides (44), a resilient tongue (58) formed into said top (42) and having a button (59) protruding upwardly therefrom for engaging within an opening of a bayonet-style wiper arm (72);
a pair of locking lugs (70) extending from said back end (48) of said main body portion (40) opposite of said nose portion (41) for receiving legs (92) of the top lock-style wiper arm (90); **characterized in that**
said nose portion (41) is hingedly connected with said front end (46) of said main body portion (40) at a resilient hinge (52) and includes a pair of locking tangs (54) spaced vertically from said resilient hinge (52) for lockingly engaging a front edge of at least one style of a top lock-style wiper arm (90); and
said sides (44) of said main body portion (40) present a pair of ledges (64,66) which are spaced vertically from one another to present a groove (68) between said ledges (64,66).

2. The windscreen wiper device (20) as set forth in claim 1 wherein said button (59) on said resilient tongue (58) extends has a ramped surface (62) which faces longitudinally towards said locking lugs (70) to provide said button (59) with a shark fin-like shape.

3. The windscreen wiper device (20) as set forth in claim 1 wherein said resilient tongue (58) is interconnected with said top (42) of said main body portion (40) adjacent said back end (48) and extends longitudinally towards said front end (46).

4. The windscreen wiper device (20) as set forth in claim 1 wherein said locking lugs (70) are interconnected with said back end (48) of said main body portion (40) via longitudinally extending legs.

5. The windscreen wiper device (20) as set forth in claim 1 wherein said base (32) presents a pair of laterally extending projections (34) and wherein each of said projections (34) is generally circular in shape and presenting an outer bearing surface and wherein said side walls (44) of said main body portion (40) of said joint part (38) present openings which receive said projections (34) on said base (32) to establish said pivot.

6. The windscreen wiper device (20) as set forth in claim 5 wherein at least one of said projections (34) includes a through hole (36) to present an inner bearing surface for receiving a pin (82) of a side pin-style wiper arm (80).

7. The windscreen wiper device (20) as set forth in claim 1 wherein said locking tangs (54) on said nose portion (41) are spaced laterally from one another on opposite sides of a U-shaped slot (56).

8. The windscreen wiper device (20) as set forth in claim 1 wherein said carrier element (26) includes a pair of longitudinally extending flexors.

9. The windscreen wiper device (20) as set forth in claim 8 wherein neighboring ends of said flexors are interconnected with one another by end caps (28).

10. The windscreen wiper device (20) as set forth in claim 9 further including a pair of subspoilers (30) extending longitudinally between said connecting assembly (22) and said end caps (28).

11. A windscreen wiper device (20), comprising:
a longitudinally extending wiper blade (24) of an elastic material for sealing against a windscreen;
a carrier element (26) operatively supporting and biasing said wiper blade (24) into a pre-curved configuration;
a connecting assembly (22) including a base (32) which is engaged with at least one of said wiper blade (24) and said carrier element (26) and a joint part (38) which is pivotally connected with said base (32) and is adapted to directly secure with a range of different styles of oscillating wiper arms;
base (32) including a pair of laterally extending projections (34) and wherein at least one of said projections (34) includes a through hole (36);
said joint part (38) being made as one integral piece and including a main body portion (40) and a nose portion (41);
said main body portion (40) extending longitudinally from a front end (46) to a back end (48) and having a top (42) and a pair of sides (44), said sides (44) including openings which are shaped to receive said projections (34) of said base (32) for pivotally connecting said joint part (38) with said base (32);
a resilient tongue (58) formed into said top (42) and having a button (59) protruding upwardly therefrom;
a pair of locking lugs (70) extending laterally on opposite sides of said joint part (38); **characterized in that**
said sides (44) of said main body portion (40) present a pair of ledges (64,66) which are spaced vertically from one another to present a groove (68) between said ledges (64,66), and
said nose portion (41) is hingedly connected with said front end (46) of said main body portion (40) at a resilient hinge (52) and includes a pair of locking tangs (54) spaced vertically from said resilient hinge (52) for lockingly engaging a front edge of at least one style of a top lock-style wiper arm.

12. The windscreen wiper device (20) as set forth in claim 11 wherein said resilient tongue (58) is interconnected with said top (42) of said main body portion (40) adjacent said back end (48) and extends longitudinally towards said front end (46).

13. The windscreen wiper device (20) as set forth in claim 11 wherein said locking tangs (54) on said nose portion (41) are spaced laterally from one another on opposite sides of a U-shaped slot (56).

14. The windscreen wiper device (20) as set forth in claim 11 wherein said locking tangs (54) on said nose portion (41) are spaced laterally from one another on opposite sides of a U-shaped slot (56).

15. The windscreen wiper device (20) as set forth in claim 11 wherein said carrier element (26) includes a pair of longitudinally extending flexors.

## Patentansprüche

1. Scheibenwischervorrichtung (20), umfassend:
ein sich in Längsrichtung erstreckendes Wischerblatt (24) aus einem elastischen Material, zur Abdichtung an einer Windschutzscheibe;
ein Trägerelement (26), das das Wischerblatt (24) wirksam stützt und in eine vorgekrümmte Konfiguration vorspannt;
eine Verbindungsbaugruppe (22), die eine Basis (32), welche mit mindestens einem von dem Wischerblatt (24) und dem Trägerelement (26) in Eingriff steht, und ein Verbindungsteil (38) einschließt, welches schwenkbar mit der Basis (32) verbunden ist und angepasst ist, direkt an einer Reihe unterschiedlicher Bauformen von sich hin- und herbewegenden Wischerarmen festgemacht zu werden;
wobei das Verbindungsteil (38) einstückig gefertigt ist und einen Hauptkörperabschnitt (40) und einen Nasenabschnitt (41) einschließt;
wobei der Hauptkörperabschnitt (40) im Querschnitt im Allgemeinen U-förmig ist und sich in Längsrichtung von einem vorderen Ende (46) zu einem hinteren Ende (48) erstreckt und eine Oberseite (42) und ein Paar von Seiten (44) aufweist, wobei eine elastische Zunge (58) in der Oberseite (42) gebildet ist und einen Knopf (59) aufweist, der davon nach oben herausragt, um in eine Öffnung eines Wischerarms (72) der Bajonett-Bauform einzugreifen;
ein Paar von Verriegelungsansätzen (70), die sich von dem hinteren Ende (48) des Hauptkörperabschnitts (40) gegenüber dem Nasenabschnitt (41) erstrecken, um Arme (92) des Wischerarms (90) der Toplock-Bauform aufzunehmen; **dadurch gekennzeichnet, dass** der Nasenabschnitt (41) mit dem vorderen Ende (46) des Hauptkörperabschnitts (40) an einem elastischen Gelenk (52) drehbar verbunden ist, und ein Paar von Verriegelungszapfen (54) einschließt, die vertikal von dem elastischen Gelenk (52) beabstandet sind, um verriegelnd in einen vorderen Rand von mindestens einer Bauform von einem Wischerarm (90) der Toplock-Bauform einzugreifen; und
die Seiten (44) des Hauptkörperabschnitts (40) ein Paar von Leisten (64, 66) bilden, die vertikal voneinander beabstandet sind, um eine Rille (68) zwischen den Leisten (64, 66) zu bilden.

2. Scheibenwischervorrichtung (20) nach Anspruch 1, wobei der Knopf (59), der sich an der elastischen Zunge (58) erstreckt, eine Rampenfläche aufweist, welche in Längsrichtung den Verriegelungsansätzen (70) zugewandt ist, um den Knopf (59) mit einer haiflossenartigen Form bereitzustellen.

3. Scheibenwischervorrichtung (20) nach Anspruch 1, wobei die elastische Zunge (58) mit der Oberseite (42) des Hauptkörperabschnitts (40) benachbart des hinteren Endes (48) verbunden ist und sich in Längsrichtung in Richtung des vorderen Endes (46) erstreckt.

4. Scheibenwischervorrichtung (20) nach Anspruch 1, wobei die Verriegelungsansätze (70) mit dem hinteren Ende (48) des Hauptkörperabschnitts (40) über sich in Längsrichtung erstreckende Arme verbunden sind.

5. Scheibenwischervorrichtung (20) nach Anspruch 1, wobei die Basis (32) ein Paar von sich seitlich erstreckenden Vorsprüngen (34) bildet und wobei jeder der Vorsprünge (34) im Allgemeinen kreisförmig ist und eine äußere Anlagefläche bildet und wobei die Seitenwände (44) des Hauptkörperabschnitts (40) des Verbindungsteils (38) Öffnungen bilden, welche die Vorsprünge (34) an der Basis (32) aufnehmen, um den Schwenkpunkt zu schaffen.

6. Scheibenwischervorrichtung (20) nach Anspruch 5, wobei mindestens einer der Vorsprünge (34) ein Durchgangsloch (36) einschließt, um eine innere Anlagefläche zu bilden, um einen Stift (82) eines Wischerarms (80) der Seitenstift-Bauform aufzunehmen.

7. Scheibenwischervorrichtung (20) nach Anspruch 1, wobei die Verriegelungszapfen (54) an dem Nasenabschnitt (41) an gegenüberliegenden Seiten eines U-förmigen Schlitzes (56) seitlich voneinander beabstandet sind.

8. Scheibenwischervorrichtung (20) nach Anspruch 1, wobei das Trägerelement (26) ein Paar von sich in Längsrichtung erstreckenden Flexoren einschließt.

9. Scheibenwischervorrichtung (20) nach Anspruch 8, wobei benachbarte Enden der Flexoren miteinander durch Endkappen (28) verbunden sind.

10. Scheibenwischervorrichtung (20) nach Anspruch 9, weiterhin einschließend ein Paar von Unterspoilern (30), die sich in Längsrichtung zwischen der Verbindungsbaugruppe (22) und den Endkappen (28) erstrecken.

11. Scheibenwischervorrichtung (20), umfassend:
ein sich in Längsrichtung erstreckendes Wischerblatt (24) aus einem elastischen Material, zur Abdichtung an einer Windschutzscheibe;
ein Trägerelement (26), das das Wischerblatt (24) wirksam stützt und in eine vorgekrümmte Konfiguration vorspannt;
eine Verbindungsbaugruppe (22), die eine Basis (32), welche mit mindestens einem von dem Wischerblatt (24) und dem Trägerelement (26) in Eingriff steht, und ein Verbindungsteil (38) einschließt, welches schwenkbar mit der Basis (32) verbunden ist und angepasst ist, direkt an einer Reihe unterschiedlicher Bauformen von sich hin- und herbewegenden Wischerarmen festgemacht zu werden;
wobei die Basis (32) ein Paar sich seitlich erstreckender Vorsprünge (34) einschließt und
wobei mindestens einer der Vorsprünge (34) ein Durchgangsloch (36) einschließt;
wobei das Verbindungsteil (38) einstückig gefertigt ist und einen Hauptkörperabschnitt (40) und einen Nasenabschnitt (41) einschließt;
wobei der Hauptkörperabschnitt (40) sich in Längsrichtung von einem vorderen Ende (46) zu einem hinteren Ende (48) erstreckt und eine Oberseite (42) und ein Paar von Seiten (44) aufweist, wobei die Seiten (44) Öffnungen einschließen, welche geformt sind, die Vorsprünge (34) der Basis (32) aufzunehmen, um das Verbindungsteil (38) schwenkbar mit der Basis (32) zu verbinden;
eine elastische Zunge (58), die in der Oberseite (42) gebildet ist und einen Knopf (59) aufweist, der davon nach oben herausragt;
ein Paar von Verriegelungsansätzen (70), die sich seitlich an gegenüberliegenden Seiten des Verbindungsteils (38) erstrecken; **dadurch gekennzeichnet, dass** die Seiten (44) des Hauptkörperabschnitts (40) ein Paar von Leisten (64, 66) bilden, die vertikal voneinander beabstandet sind, um eine Rille (68) zwischen den Leisten (64, 66) zu bilden, und
der Nasenabschnitt (41) mit dem vorderen Ende (46) des Hauptkörperabschnitts (40) an einem elastischen Gelenk (52) drehbar verbunden ist, und ein Paar von Verriegelungszapfen (54) einschließt, die vertikal von dem elastischen Gelenk (52) beabstandet sind, um verriegelnd in einen vorderen Rand von mindestens einer Bauform von einem Wischerarm der Toplock-Bauform einzugreifen.

12. Scheibenwischervorrichtung (20) nach Anspruch 11, wobei die elastische Zunge (58) mit der Oberseite (42) des Hauptkörperabschnitts (40) benachbart des hinteren Endes (48) verbunden ist und sich in Längsrichtung in Richtung des vorderen Endes (46) erstreckt.

13. Scheibenwischervorrichtung (20) nach Anspruch 11, wobei die Verriegelungszapfen (54) an dem Nasenabschnitt (41) an gegenüberliegenden Seiten eines U-förmigen Schlitzes (56) seitlich voneinander beabstandet sind.

14. Scheibenwischervorrichtung (20) nach Anspruch 11, wobei die Verriegelungszapfen (54) an dem Nasenabschnitt (41) an gegenüberliegenden Seiten eines U-förmigen Schlitzes (56) seitlich voneinander beabstandet sind.

15. Scheibenwischervorrichtung (20) nach Anspruch 11, wobei das Trägerelement (26) ein Paar von sich in Längsrichtung erstreckenden Flexoren einschließt.

## Revendications

1. Dispositif de balai d'essuie-glace (20), comprenant :
une lame de balai d'essuie-glace qui s'étend de manière longitudinale (24), réalisée dans un matériau élastique afin d'appuyer de manière hermétique contre un pare-brise ;
un élément porteur (26) qui supporte et qui sollicite de manière opérationnelle ladite lame de balai (24) dans une configuration pré-incurvée ;
un ensemble connexion (22) qui comprend une base (32) qui est mise en prise avec l'un au moins de ladite lame de balai (24) et dudit élément porteur (26), et une partie jonction (38) qui est connectée de manière pivotante avec ladite base (32), et qui est adaptée de façon à fixer de manière directe une gamme de différents modèles de bras de balais oscillants ;
ladite partie jonction (38) étant réalisée d'une seule pièce, et comprenant une partie corps principal (40) et une partie nez (41) ;
ladite partie corps principal (40) présentant en général une section transversale en forme de U, et s'étendant de manière longitudinale à partir d'une extrémité avant (46) vers une extrémité arrière (48), et présentant un dessus (42) et une paire de côtés (44), une languette élastique (58) formée dans ledit dessus (42), et présentant un bouton (59) qui fait saillie de là vers le haut de façon à venir en prise à l'intérieur d'une ouverture d'un bras de balai du style à baïonnette (72) ;
une paire de pattes de verrouillage (70) qui s'étendent à partir de ladite extrémité arrière (48) de ladite partie corps principal (40) opposée à ladite partie nez (41), destinées à recevoir les jambes (92) du bras de balai du style à verrouillage supérieur (90) ; **caractérisé en ce que** :
ladite partie nez (41) est connectée de manière articulée avec ladite extrémité avant (46) de ladite partie corps principal (40) au niveau d'une charnière élastique (52), et comprend une paire de tenons de verrouillage (54) espacés de manière verticale à partir de ladite charnière élastique (52) de façon à mettre en prise de manière verrouillée un bord avant d'un bras de balai du style à verrouillage supérieur (90) au moins ; et
lesdits côtés (44) de ladite partie corps principal (40) présentent une paire de rebords (64, 66) qui sont espacés de manière verticale les uns des autres de façon à présenter une rainure (68) entre lesdits rebords (64, 66).

2. Dispositif de balai d'essuie-glace (20) selon la revendication 1, dans lequel ledit bouton (59) qui se situe sur ladite languette élastique (58), présente une surface en rampe (62) qui fait face de manière longitudinale vers lesdites pattes de verrouillage (70) de façon à fournir audit bouton (59) une forme d'aileron de requin.

3. Dispositif de balai d'essuie-glace (20) selon la revendication 1, dans lequel ladite languette élastique (58) est interconnectée avec ledit dessus (42) de ladite partie corps principal (40), adjacente à ladite extrémité arrière (48), et s'étend de manière longitudinale vers ladite extrémité avant (46).

4. Dispositif de balai d'essuie-glace (20) selon la revendication 1, dans lequel lesdites pattes de verrouillage (70) sont interconnectées avec ladite extrémité arrière (48) de ladite partie corps principal (40) par l'intermédiaire de jambes qui s'étendent de manière longitudinale.

5. Dispositif de balai d'essuie-glace (20) selon la revendication 1, dans lequel ladite base (32) présente une paire de saillies qui s'étendent de manière latérale (34), et dans lequel chacune desdites saillies (34) présente en général une forme circulaire, et présente une surface d'appui extérieure, et dans lequel lesdites parois latérales (44) de ladite partie corps principal (40) de ladite partie jonction (38), présentent des ouvertures qui reçoivent lesdites saillies (34) sur ladite base (32), de façon à établir ledit pivot.

6. Dispositif de balai d'essuie-glace (20) selon la revendication 5, dans lequel l'une au moins desdites saillies (34) comprend un trou traversant (36) de façon à présenter une surface d'appui intérieure destinée à recevoir une broche (82) d'un bras de balai latéral du style à broche (80).

7. Dispositif de balai d'essuie-glace (20) selon la revendication 1, dans lequel lesdits tenons de verrouillage (54) situés sur ladite partie nez (41), sont espacés de manière latérale les uns des autres sur les côtés opposés d'une fente en forme de U (56).

8. Dispositif de balai d'essuie-glace (20) selon la revendication 1, dans lequel ledit élément porteur (26) comprend une paire de dispositifs de flexion qui s'étendent de manière longitudinale.

9. Dispositif de balai d'essuie-glace (20) selon la revendication 8, dans lequel les extrémités voisines desdits dispositifs de flexion, sont interconnectées les unes aux autres par des bouchons d'extrémité (28).

10. Dispositif de balai d'essuie-glace (20) selon la revendication 9, comprenant en outre une paire de déflecteurs secondaires (30) qui s'étendent de manière longitudinale entre ledit ensemble connexion (22) et lesdits bouchons d'extrémité (28).

11. Dispositif de balai d'essuie-glace (20), comprenant :
une lame de balai d'essuie-glace qui s'étend de manière longitudinale (24) réalisée dans un matériau élastique afin d'appuyer de manière hermétique contre un pare-brise ;
un élément porteur (26) qui supporte et qui sollicite de manière opérationnelle ladite lame de balai (24) dans une configuration pré-incurvée ;
un ensemble connexion (22) qui comprend une base (32) qui est mise en prise avec l'un au moins de ladite lame de balai (24) et dudit élément porteur (26), et une partie jonction (38) qui est connectée de manière pivotante avec ladite base (32), et qui est adaptée de façon à fixer de manière directe une gamme de différents modèles de bras de balais oscillants ;
une base (32) qui comprend une paire de saillies qui s'étendent de manière latérale (34), et
dans lequel l'une au moins desdites saillies (34) comprend un trou traversant (36) ;
ladite partie jonction (38) étant réalisée d'une seule pièce, et comprenant une partie corps principal (40) et une partie nez (41) ;
ladite partie corps principal (40) s'étendant de manière longitudinale à partir d'une extrémité avant (46) vers une extrémité arrière (48), et présentant un dessus (42) et une paire de côtés (44), lesdits côtés (44) comprenant des ouvertures qui sont formées de façon à recevoir lesdites saillies (34) de ladite base (32) de façon à connecter de manière pivotante ladite partie jonction (38) à ladite base (32) ;
une languette élastique (58) formée dans ledit dessus (42), et qui présente un bouton (59) qui fait saillie de là vers le haut ;
une paire de pattes de verrouillage (70) qui s'étendent de manière latérale sur les côtés opposés de ladite partie jonction (38) ; **caractérisé en ce que** :
lesdits côtés (44) de ladite partie corps principal (40) présentent une paire de rebords (64, 66) qui sont espacés de manière verticale les uns des autres de façon à présenter une rainure (68) entre lesdits rebords (64, 66) ; et
ladite partie nez (41) est connectée de manière articulée avec ladite extrémité avant (46) de ladite partie corps principal (40) au niveau d'une charnière élastique (52), et comprend une paire de tenons de verrouillage (54) espacés de manière verticale à partir de ladite charnière élastique (52) de façon à mettre en prise de manière verrouillée un bord avant d'un bras de balai du style à verrouillage supérieur au moins.

12. Dispositif de balai d'essuie-glace (20) selon la revendication 11, dans lequel ladite languette élastique (58) est interconnectée avec ledit dessus (42) de ladite partie corps principal (40), adjacente à ladite extrémité arrière (48), et s'étend de manière longitudinale vers ladite extrémité avant (46).

13. Dispositif de balai d'essuie-glace (20) selon la revendication 11, dans lequel lesdits tenons de verrouillage (54) situés sur ladite partie nez (41), sont espacés de manière latérale les uns des autres sur les côtés opposés d'une fente en forme de U (56).

14. Dispositif de balai d'essuie-glace (20) selon la revendication 11, dans lequel lesdits tenons de verrouillage (54) situés sur ladite partie nez (41), sont espacés de manière latérale les uns des autres sur les côtés opposés d'une fente en forme de U (56).

15. Dispositif de balai d'essuie-glace (20) selon la revendication 11, dans lequel ledit élément porteur (26) comprend une paire de dispositifs de flexion qui s'étendent de manière longitudinale.
